# EUROPEAN PATENT APPLICATION

(11) **EP 4 166 510 A1**
(43) Date of publication of application: **19.04.2023**
(21) Application number: 21202531.6
(22) Date of filing: 13.10.2021
(51) Int. Cl.: C02F 1/32, A61L 2/08

(54) **MOUNTING STRUCTURES FOR OPEN CHANNEL UV WATER TREATMENT INSTALLATIONS**

(71) Applicant: Xylem Europe GmbH, 8200 Schaffhausen (CH)
(72) Inventor: Stuckert, Mario, 31707 Bad Eilsen (DE); Roehring, Birk, 32257 Bünde (DE)
(74) Representative: Lenzing Gerber Stute

(57) **Abstract**

The invention relates to a mount (1) for movably mounting at least one UV radiator module (2) in an open channel water or wastewater treatment system, the mount (1) comprising
- at least one holder (3) with a base plate (5) and at least one fastening area (6) that extends perpendicular to the base plate (5), and
- a bracket (8) with a center section (9) and two parallel and straight side edges (11), which are disposed at a distance from each other, and with two legs (10) that are respectively connected to the center section (9) at side edges (11) and that extend from the center section (9) parallel to one another and perpendicular to the center section (9), wherein
- fastening means (12) are provided on the at least one fastening area (6) and at the two legs (10) which are arranged to fasten the bracket (8) to the at least one holder (3, 4) in a selectable position so that the distance between the base plate (5) and the center section (9) is adjustable.

## Description

The present invention relates to mounting structures for mounting UV radiator modules in an open channel water or wastewater treatment system.

UV radiator modules in which a number of tubular UV radiators are arranged parallel to one another are known from the prior art. The radiators usually each have an outer cladding tube transparent to UV radiation and a radiation source arranged in the cladding tube, which in many cases is designed as a low-pressure mercury amalgam radiator or an excimer radiator. These radiation sources generate UV radiation in the wavelength range around 250 nm, with which pathogens can be inactivated or killed. Radiation modules with a large number of such radiators are therefore used for drinking water disinfection or wastewater disinfection, whereby no chemicals need to be added to the treated water for disinfection and, in particular, no chlorine odor is produced in the drinking water, for example. Disinfection with such radiator modules, especially those based on low-pressure radiators, is also energy-efficient and reliable over a long period of time.

In the context of the present application, the term "UV radiator module" should be understood as an assembly with a supporting structure, generally a frame, which holds a number of UV radiators in place. The UV radiator module is intended to be lowered into an open channel through which water to be treated flows and thereby passes through the module and, if the UV radiators are powered up, is irradiated with ultraviolet radiation, and thus disinfected. Such modules make installation, operation, and servicing of ultraviolet disinfection plants more practical because the individual ultraviolet sources can be mounted and held inside the module in precisely defined positions and can be connected to an external power source through common wiring. Lowering the module into the channel and lifting the module out of the channel is quicker than installing individual ultraviolet sources. In addition, the access to the ultraviolet sources for technical service is facilitated when a larger number of ultraviolet sources can be handled by lifting the module out of the respective channel.

The modules themselves are held and guided in mounting structures which are generally fixed to the walls and/or the bottom of the channel and provide guide rails to enable operating personnel to lower the modules into the channel or lift the modules out of the channel. In the lowered state, the mounting structures ensure a defined position of the modules in the channel and relative to one another, if more than one module is present in a row of modules perpendicular to the direction of water flow.

As to the geometry of the mounting structures, one defined direction is the orientation of the guide rails in which the modules are lifted and lowered, another defined direction is the direction of water flow or intended water flow through the modules, which is generally transverse to the longitudinal axis. A third direction is defined by a direction transverse to the direction of water flow. While the guide rails are generally vertical or aligned in an acute angle against the vertical direction, the direction of water flow and the direction transverse to the water flow are, in a real implementation, orientated approximately horizontally.

The prior art comprises for example open channel installations with UV radiators mounted parallel to the water flow, see for example CA 2,295,240 A1. These modules are lifted out of the channel manually and need no dedicated mounting structures. Similar is the disclosure of US 7,390,406 B2, which also shows UV radiators that are aligned parallel to the water flow direction. The modules can be extracted from the channel by swivelling them upwards around pivot bearings. Seals are provided between the headers of the modules in order to avoid the water level rising above the position of the highest lamp in the modules. The seals are elastically expandable when pressurized with compressed air.

In GB 1,385,661 A, an installation is shown in which parallel rows of lamps form a module. The rows are arranged in the direction of flow. Fixed partition walls are provided between the rows of lamps to define individual parallel channels for each module. No provision is made to compensate for tolerances that are exist in the walls of the channels or the surrounding structure.

In US 7,323,694 B2, elastic seals are provided between the modules at their upper frame portions. The modules can be also lifted from the channel individually by swivelling them upwards around a pivot bearing.

Finally, US 2012 080 054 A1 discloses a footer which is made of two matching C-profiles. The footer is located at the bottom of a module, and it is expandable and retractable in the direction of the longitudinal axis of the lamps to remove debris that is scraped from the surfaces of the lamps. This footer is not a mounting structure to close a gap between lamps and the bottom wall.

A problem with the known installations is that a precise dimensioning of the channel walls is necessary in order to avoid areas with low irradiation intensity between the walls and the UV radiators and additionally that neighbouring modules must be so close together that also in the area between two modules, sufficient UV intensity is guaranteed. Therefore, channel construction, especially in concrete, is complex and the necessity to mount neighbouring modules close together limit the freedom to design guide rails and lifting structures in that area.

It is therefore the object of the present invention to create a mounting structure for mounting UV radiator modules in an open channel water or wastewater treatment system.

This object is achieved by a mounting structure for mounting UV radiator modules in an open channel water or wastewater treatment system with the features of claim 1. Advantageous embodiments of the invention are the subject of the dependent claims.

A mount for movably mounting at least one UV radiator module in an open channel water or wastewater treatment system is disclosed, the mount comprising
- at least one holder with a base plate and at least one fastening area that extends perpendicular to the base plate, and
- a bracket with a center section and two parallel and straight side edges, which are disposed at a distance from each other, and with two legs that are respectively connected to the center section at side edges and that extend from center in parallel direction perpendicular to the center section, wherein
- fastening means are provided on the at least one fastening area and at the two legs which are arranged to fasten the bracket to the at least one holder in a selectable position so that the distance between the base plate and the center section is selectable and adjustable.

Thus, this mount can be adjusted in width to compensate for tolerances in channel width which cannot be taken up by the UV radiator modules themselves due to their fixed geometry.

Mounting is facilitated when the bracket is essentially U-shaped with the center section being flat. "Flat" in this context means that the central section is substantially plate-shaped so that, when assembled, it is parallel or substantially parallel to the adjacent wall of the concrete channel. The legs are oriented at right angles to the central section. In production, this component is made from a flat metal sheet by bending the legs in the same direction relative to the central section at two parallel longitudinal edges. The area of the longitudinal edges is rounded. The legs have approximately the same height relative to the central section over the entire length of the component. Preferably the at least one holder are two separate holders, each being L-shaped in cross section. In this case, two holders can be mounted easily to the cannel wall and remain accessible when the mount is in place.

The bracket preferably carries a guide rail for guiding a UV radiator module in a direction parallel to the longitudinal extension of the legs so that adjusting the bracket relative to the channel wall automatically adjusts the respective distance of the guide rail. This is especially convenient because the guide rails have to accept compatible rollers or guide elements of the modules.

When the bracket and the at least one holder, in assembled state, together with the adjacent channel wall define an internal volume which is filled with solid material, there is a greatly reduced risk of retained contaminated water remaining inside the mount. Preferably, the solid material is mortar or another hydraulically hardening, essentially inorganic material.

The mounting and adjusting process can be carried out with common tools and materials like screws, washers and nuts if the fastening means comprise elongated holes in at least one of the holders and the bracket to overlap with corresponding holes in the other of the holders and the bracket allowing relative movement of the bracket to the holders before fixing these parts to one another.

It is preferred that two separate holders are provided and are mounted with their base plates facing away from each other, and that the bracket is mounted embracing the legs of the two holders so that the base plates of the holders are not covered by the bracket in mounted state.

In another embodiment, only one holder is fixed to the sidewall of the channel. In this case, the holder may have two fastening areas and a single base plate between them, similar to the design of the bracket.

A water treatment installation with an open water channel having parallel sidewalls and a bottom wall and two mounts as described above that are mounted in opposite positions and facing each other to the two sidewalls can easily be adapted in lateral width of the mounts to accept UV radiator modules of a given lateral dimension. Preferably in such an installation at least one UV radiator module is held between the mounts and is movable along the guide rails upwards and downwards in a direction which is oriented between 60° and 90° relative to the horizontal.

In a preferred embodiment, at least two UV radiator modules are held between the mounts, wherein a spacer is provided between each pair of neighboring modules. This way, a larger installation can easily be mounted in a wide channel.

Lifting and lowering the UV radiator modules individually is facilitated when the at least one spacer carries guide rails that are oriented parallel to the guide rails of the mounts.

A solid, heavy construction can be produced at the construction site when the at least one spacer is hollow and filled with solid material, especially with mortar or another hydraulically hardening, essentially inorganic material. A void inside the spacer can thus be filled, so that not dead volume can retain potentially contaminated water without that water being subjected to the disinfection process.

A simple construction is given when the at least one spacer is made of two C-profiles which are mounted to each other along the free edges of their profile so as to define an internal void. The free edges may be provided with flange portions which can be bolted together.

In the following, an embodiment of the present invention is described with reference to the drawings, in which:
- Fig. 1:: shows a mount and a part of a UV radiator module in a cross section;
- Fig. 2:: shows an axial top view of the mount and the module of fig. 1 with the symmetry axis of the radiators perpendicular to the plane of the drawing and the mount being fixed to a sidewall;
- Fig. 3:: shows an area between two neighboring modules in which a spacer is provided between the modules; and
- Fig. 4:: shows the area of fig. 3 in a top view wherein the void of the spacer is filled.

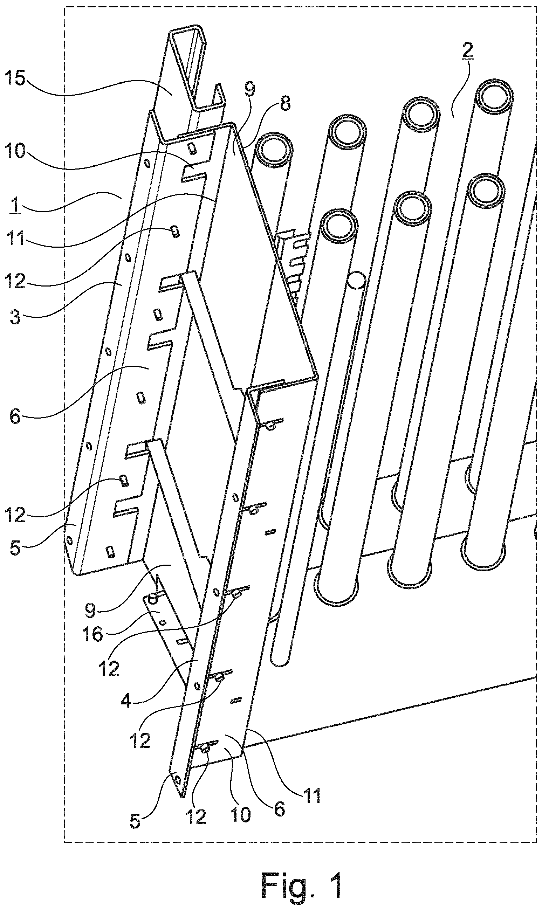

Fig. 1 shows a mount, generally designated by reference number 1, and part of a UV radiator module, generally designated by reference number 2, in a cross section in an isometric view. The details of the UV radiator module 2 are not relevant in the context of the present invention. Identical or functionally identical elements are assigned the same reference numerals throughout the figures.

The mount 1 comprises a first holder 3 and a second holder 4. The holders 3 and 4 are axially symmetrical or of identical design and each have a base plate 5 and a fastening area 6 which are aligned at right angles to one another and are joined together in one piece along a straight line. The holders 3, 4 can be made, for example, as stamped and bent parts from stainless steel sheet.

A bracket 8 is approximately C-shaped in cross section and has a central portion 9 and two side portions in the form of legs 10 extending at right angles from the central portion 9. The legs 10 are integrally formed with the central section 9, and in this embodiment by folding along two parallel edges 11. The material of the bracket 8 is preferably the same as the material of the previously described holders 3 and 4. In cross-section, the extension of the clamp 8, the central section 9 is wider than the extension of the legs 10 oriented at right angles thereto.

Fastening means 12 are provided on the at least one fastening area 6 and at the two legs 10 which are arranged to fasten the bracket 8 to the holders 3, 4 in a selectable position so that the distance between the base plate 5 and the center section 9 is adjustable. The fastening means 12 may comprise threaded bolts and nuts which are seated in elongated slots or holes in the respective parts.

The bracket 8 further carries a guide rail 15 which is fixed to the bracket 8 and holds and guides the UV radiator module 2 in a movement along that guide rail 15, which, in a mounted position, is vertical or inclined approximately within an angular range of +- 30° from the vertical direction.

A bottom plate 16 may be provided to fix the bracket 8 and thus the mount 1 to a bottom wall of a concrete open water channel, for example a wastewater channel carrying wastewater as effluent from a wastewater treatment plant, which is the predominant use of the installation as described in this specification.

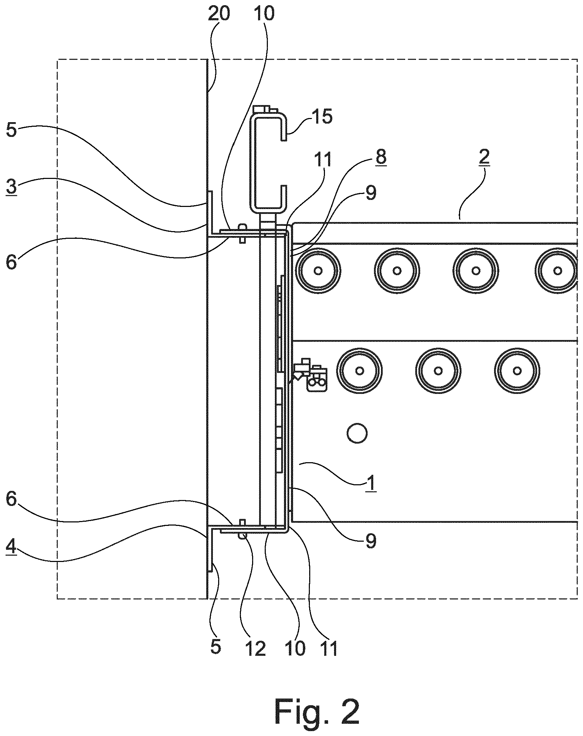

Fig. 2 shows the items of Fig. 1 in a plan view from above in cross section. In this figure, the mount 1 is mounted with the base plates 5 of the holders 3, 4 to a concrete sidewall 20 of a wastewater channel. The distance between the bracket 8 and the holders 3, 4 and effectively between the sidewall 20 and the center section 9 of the bracket 8 has been adjusted as necessary and the fastening elements 12 fixed. A space is thus defined between the bracket 8, the holders 3, 4 and the sidewall 20. To avoid that a volume wastewater is retained or permanently present in that space, the space has been filled with a solid or solidifying, not water soluble material 21 like mortar, grout or concrete in order to eliminated mostly any void in that area. Thus, no reservoir for unwanted growth of bacteria remains inside the mount 2.

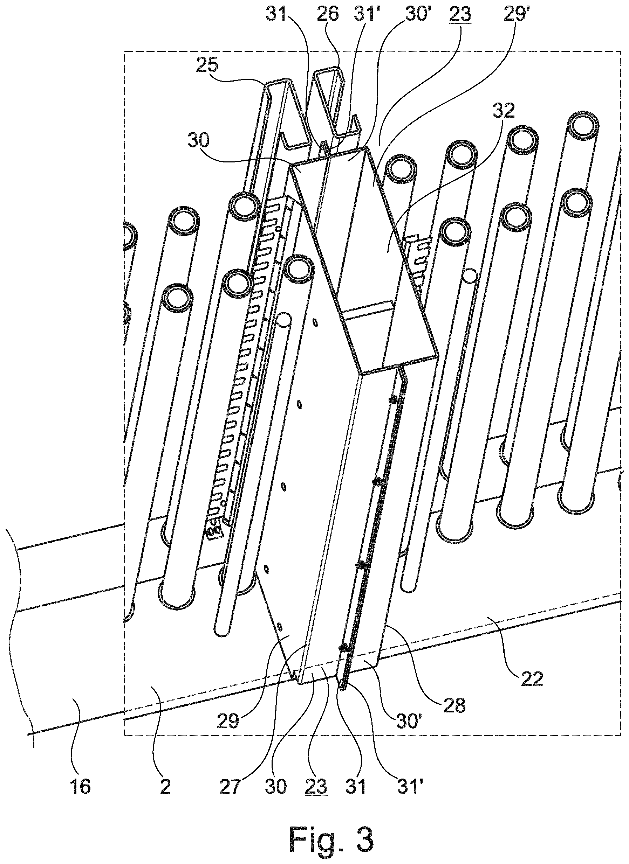

Turning to a central portion of the channel, Fig. 3 shows an area between two neighboring modules 2, 22, in which a spacer 23 is provided between the modules 2 and 22. The spacer 23 holds two guide rails 25 and 25 which are equivalent to the guide rail 15 of figs. 1 and 2 in size and function. The spacer 23 further comprises a first shell 27 and a second shell 28 which are both made from sheet metal by a folding process in which a central section 29, 29' is provides with sidewalls 30, 30 and mounting flanges 31, 31'. With the flanges 31 and 31' facing each other and fixed to each other, the first shell 27 and the second shell 28 form a box profile with an inner void 32.

Bottom plate 16 is only partly visible here. Bottom plate 16 is identical with the respective bottom plate in fig. 1 and runs at the bottom of the channel between mount 1 and spacer 23. The length of bottom plate 16 in this direction defines the width between mount 1 and spacer 23 and hence between guide rail 15 and guide rail 25. This width is determined by the width of a UV radiator module 2. This width is fixed by the construction of UV radiator module 2 and so the range of adjustment of the mount 1 in this direction is greatly facilitating the installation of the UV radiator modules inside a given concrete water channel which has unavoidable tolerances that must be compensated for.

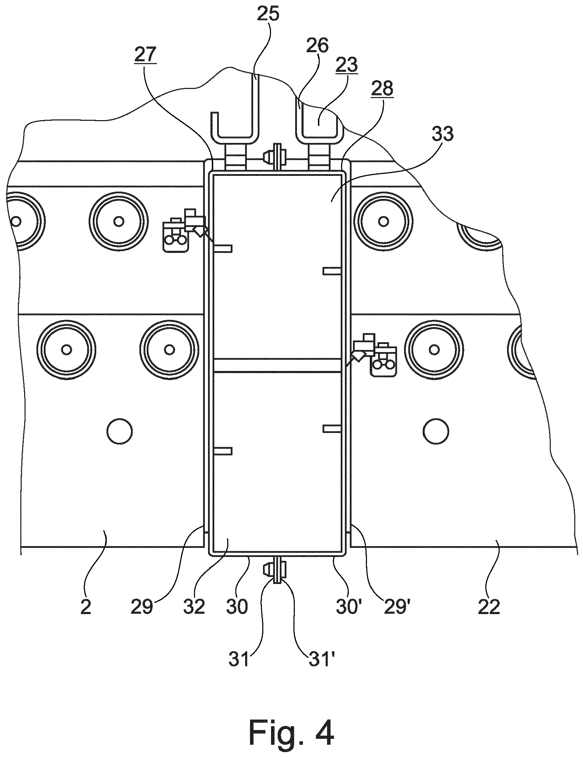

Fig. 4 shows the section of the installation shown in Fig. 3 in a top view. In this representation, it can be seen that the void 32 is filled with a solid or solidifying material like mortar, grout or concrete in order to eliminated mostly any void in that area for the same reason that is explained above with reference to fig. 2.

For the sake of completeness, it is also mentioned that a second mount is provided on the channel wall opposite the mount 1 shown in Fig. 1. If two modules 2, 22 are used next to each other, a spacer 23 is to be provided between the modules 2 and 22. If more than two modules 2, 22 are to be installed inside the channel side by side, then correspondingly more spacers 23 are to be provided.

## Claims

1. A mount (1) for movably mounting at least one UV radiator module (2) in an open channel water or wastewater treatment system, the mount (1) comprising
- at least one holder (3, 4) with a base plate (5) and at least one fastening area (6) that extends perpendicular to the base plate (5), and
- a bracket (8) with a center section (9) and two parallel and straight side edges (11), which are disposed at a distance from each other, and with two legs (10) that are respectively connected to the center section (9) at side edges (11) and that extend from the center section (9) parallel to one another and perpendicular to the center section (9), wherein
- fastening means (12) are provided on the at least one fastening area (6) and at the two legs (10) which are arranged to fasten the bracket (8) to the at least one holder (3, 4) in a selectable position so that the distance between the base plate (5) and the center section (9) is adjustable.

2. The mount according to claim 1, **characterized in that** the bracket (8) is essentially U-shaped with the center section (9) being flat.

3. The mount according to claim 1 or 2, **characterized in that** two holders (3, 4) are provided, each being L-shaped in cross section.

4. The mount according to any of the previous claims, **characterized in that** the bracket (8) carries a guide rail (15) for guiding a UV radiator module (2) in a direction parallel to the longitudinal extension of the legs (6).

5. The mount according to any of the previous claims, **characterized in that** the bracket (8) and the at least one holder (3, 4), in assembled state, together with an adjacent channel wall (20) define an internal volume which is filled with solid material (21).

6. The mount according to claim 5, **characterized in that** the solid material (21) is mortar or another hydraulically hardening, essentially inorganic material.

7. The mount according to any of the previous claims, **characterized in that** the fastening means (12) comprise elongated holes in at least one of the holders (3, 4) and the bracket (8) to overlap with corresponding holes in the other of the holders and the bracket (8) allowing relative movement of the bracket (8) to the holders (3, 4) before fixing these parts to one another.

8. The mount according to any of the previous claims 3 to 7, **characterized in that** two holders (3, 4) are provided and are mounted with their base plates (5) facing away from each other, and that the bracket (8) is mounted embracing the legs (6) of the two holders (3, 4).

9. A water treatment installation with an open water channel having parallel sidewalls and a bottom wall, **characterized in that** two mounts (1) according to any one of the previous claims are mounted in opposite positions and facing each other to the two sidewalls (20).

10. The water treatment installation according to claim 9, **characterized in that** at least one UV radiator module (2, 22) is held between the mounts (1) and is movable along the guide rails (15, 25, 26) upwards and downwards in a direction which is oriented between 60° and 90° relative to the horizontal.

11. The water treatment installation according to claim 10, **characterized in that** at least two UV radiator modules (2, 22) are held between the mounts (1), wherein a spacer (23) is provided between each pair of neighboring UV radiator modules (2, 22).

12. The water treatment installation according to claim 11, **characterized in that** the at least one spacer (23) carries guide rails (25, 26) that are oriented parallel to the guide rails (15) of the mounts.

13. The water treatment installation according to claim 11 or 12, **characterized in that** at least one spacer (23) is hollow and filled with solid material (33).

14. The water treatment installation according to claim 13, **characterized in that** the solid material (33) is mortar or another hydraulically hardening, essentially inorganic material.

15. The water treatment installation according to any of claim 11 - 14, **characterized in that** at least one spacer (23) is made of two C-profiles (27, 28) which are mounted to each other along the free edges of their profile so as to define an internal void (32).
